# DEMANDE DE BREVET EUROPEEN

(11) **EP 0 573 400 A1**
(43) Date de publication de la demande: **08.12.1993**
(21) Numéro de dépôt: 93870092.9
(22) Date de dépôt: 02.06.1993
(51) Int. Cl.: C14C 1/02, C01D 3/08, B09B 3/00

(54) **Traitement pour le recyclage du sel**

(30) Priorité: 02.06.1992 BE 9200504
(71) Demandeur: S.A. EUROCUIRS, B-4020 Liège (BE); Dumez, Hubert, B-4051 Vaux-sous-Chèvremont (BE); Henrotte, Toussaint, B-4300 Waremme (BE)
(72) Inventeur: Dumez, Hubert, B-4051 Vaux-sous-Chèvremont (BE)
(74) Mandataire: Vanderperre, Robert

(57) **Abrégé**

Le traitement consiste :
- à tamiser (2) le sel pollué (1), de manière à éliminer la fraction grosse des déchets organiques ;
- à placer, après ce premier tamisage, La fraction passante (4) dans une cuve (5) et à introduire dans ladite cuve une quantité d'eau saturée en sel propre (6) de même nature chimique que le sel pollué et dénommée saumure;
- à provoquer un premier lavage par une agitation de ou dans La cuve (5), de manière que La saumure se charge des matières organiques, qui restaient collées sur le sel pollué ;
- à enlever La saumure polluée (7) et à l'envoyer dans une cuve de décantation (8), où la saumure est régénérée par une opération de floculation ;
- à provoquer un second lavage, identique au premier, du sel restant dans la cuve après le premier lavage;
- à placer le sel complètement lavé sur égouttoir (12) ou tamis d'environ 0,5 mm à 1 mm.

## Description

La présente invention concerne le sel servant au salage des peaux d'abattage, destiné à leur conservation et à leur nettoyage avant le tannage.

Après usage ce sel est normalement pollué par un ensemble de matières organiques, telles que paille, poils, sang, excrément, graisse.

Actuellement, le sel pollué est mis en décharge et est remplacé par du sel propre, d'où deux sources de frais relativement importantes.

Le but de l'invention est de créer un traitement du sel pollué en vue de le recycler, traitement caractérisé en ce qu'il consiste :
- à tamiser le sel pollué, de manière à éliminer la fraction grosse des déchets organiques ;
- à placer, après ce premier tamisage, la fraction passante dans une cuve et à introduire dans ladite cuve une quantité d'eau saturée en sel propre de même nature chimique que le sel pollué et dénommée saumure;
- à provoquer un premier lavage par une agitation de ou dans la cuve, de manière que la saumure se charge des matières organiques, qui restaient collées sur le sel pollué ;
- à enlever la saumure polluée et à l'envoyer dans une cuve de décantation, où la saumure est régénérée par une opération de floculation ;
- à provoquer un second lavage, identique au premier, du sel restant dans la cuve après le premier lavage;
- à placer le sel complètement lavé sur égouttoir ou tamis d'environ 0,5 mm à 1 mm.

L'invention est décrite maintenant plus en détail sur la base du schéma de traitement annexé, à titre d'exemple uniquement.

Le sel pollué 1, ayant servi au nettoyage et à la conservation de peaux avant le tannage, est tamisé à plus ou moins 5 mm en 2 , de manière à éliminer la fraction grosse des déchets organiques. Cette fraction faible éliminée 3 est jetée ou éventuellement retraitée.

La fraction passante plus importante 4 est placée en 5 dans une cuve, dans laquelle on introduit une quantité d'eau saturée en sel propre 6, de même nature chimique que le sel pollué 1, et qui sera appelée ici saumure.

Par l'agitation de la cuve 5 la saumure 6 se charge des fines matières organiques qui étaient restées collées sur le sel pollué.

Après arrêt de l'agitation de la cuve 5 la saumure polluée 7 est enlevée et envoyée dans une cuve de décantation 8, où est pratiquée une opération de floculation, avec des agents chimiques spécifiques de nature organique et minérale, pour régénérer cette saumure.

La floculation a pour but de faire précipiter très rapidement les fines particules organiques mises en suspension dans la saumure. Elle est réalisée par l'addition chronologique :
- d'une quantité ou d'un volume de solution solide de chaux éteinte,
- d'une quantité ou d'un volume de solution d'un floculant organique.

Sur le sel restant au fond de la cuve 5 on pratique un second lavage identique au premier lavage. On utilise ici la saumure régénérée 9 provenant du premier lavage.

La saumure 10 provenant du second lavage, moins polluée que la saumure 7 provenant du premier lavage, est renvoyée directement en tête de traitement dans la cuve 5 pour le premier lavage d'une nouvelle opération, après avoir placé sur égouttoir ou tamis 12 de 0,5 mm à 1 mm le sel lavé 11.

Le sel 13 peut maintenant être recyclé et servir à nouveau pour le nettoyage et la conservation de peaux d'abattage.

Grâce au procédé de recyclage suivant l'invention on évite les frais, d'une part, de la mise en décharge du sel pollué et, d'autre part, de l'utilisation de nouvelles quantités de sel pour chaque opération préalable au tannage.

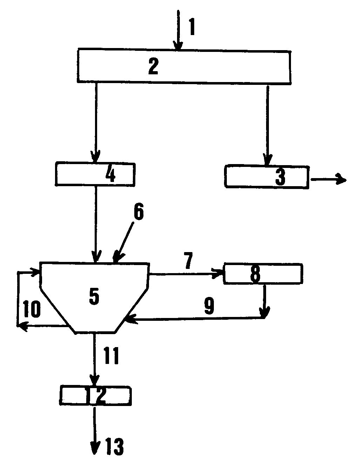

## Revendications

1. Traitement pour le recyclage du sel ayant servi au salage de peaux d'abattage, caractérisé en ce qu'il consiste :
- à tamiser le sel pollué, de manière à éliminer la fraction grosse des déchets organiques ;
- à placer, après ce premier tamisage, la fraction passante dans une cuve et à introduire dans ladite cuve une quantité d'eau saturée en sel propre de même nature chimique que le sel pollué et dénommée saumure;
- à provoquer un premier lavage par une agitation de ou dans la cuve, de manière que la saumure se charge des matières organiques, qui restaient collées sur le sel pollué ;
- à enlever la saumure polluée et à l'envoyer dans une cuve de décantation, où la saumure est régénérée par une opération de floculation ;
- à provoquer un second Lavage, identique au premier, du sel restant dans la cuve après le premier lavage;
- à placer le sel complètement lavé sur égouttoir ou tamis d'environ 0,5 mm à 1 mm.

2. Traitement pour le recyclage du sel suivant la revendication 1, caractérisé en ce que lors du second lavage on utilise la saumure régénérée du premier lavage.

3. Traitement pour le recyclage du sel suivant la revendication 1, caractérisé en ce que la saumure du second lavage, moins polluée que celle du premier lavage, est envoyée directement en tête de lavage pour le premier lavage d'une nouvelle opération.

4. Traitement pour le recyclage du sel suivant la revendication 1, caractérisé en ce que pour la floculation on utilise des agents chimiques spécifiques de nature organique et minérale.

5. Traitement pour le recyclage du sel suivant la revendication 1, caractérisé en ce que la floculation, destinée à faire précipiter très rapidement les fines particules organiques mises en suspension dans la saumure, est réaLisée par l'addition chronologique :
- d'une quantité ou d'un volume de solution solide de chaux éteinte,
- d'une quantité ou d'un volume de solution d'un floculant organique.
